# EUROPÄISCHE PATENTANMELDUNG

(11) **EP 4 039 352 A1**
(43) Veröffentlichungstag der Anmeldung: **10.08.2022**
(21) Anmeldenummer: 21156015.6
(22) Anmeldetag: 09.02.2021
(51) Int. Cl.: B01D 46/00, A47L 9/20, B01D 46/04, B01D 46/10, B01D 46/42

(54) **ABREINIGUNGSEINHEIT FÜR EINEN FILTER EINER STAUBSAUGVORRICHTUNG, ABREINIGUNGSVERFAHREN UND STAUBSAUGVORRICHTUNG**

(71) Anmelder: Hilti Aktiengesellschaft, 9494 Schaan (LI)
(72) Erfinder: Barbier, Lionel, 86916 Kaufering (DE)
(74) Vertreter: Hilti Aktiengesellschaft Corporate Intellectual Property

(57) **Zusammenfassung**

Die vorliegende Erfindung betrifft eine Abreinigungseinheit für einen Filter einer Staubsaugvorrichtung, wobei die Abreinigungseinheit mindestens einen Elektromagneten umfasst, der dazu eingerichtet ist, ein Ventil der Abreinigungseinheit zu öffnen oder zu schließen, wobei in einer Offen-Stellung des Ventils ein Luftstrom zum Abreinigen des Filters durch das geöffnete Ventil fließen kann. Das Ventil der Abreinigungseinheit umfasst eine erste Ventilkomponente und eine zweite Ventilkomponente, die vorzugsweise zeitversetzt zueinander geöffnet werden können. In einem zweiten Aspekt betrifft die Erfindung eine Staubsaugvorrichtung mit einer vorgeschlagenen Abreinigungseinheit, sowie ein Verfahren zur Abreinigung eines Filters einer Staubsaugvorrichtung, bei dem die Komponenten des vorzugsweise zweigeteilten Ventils nacheinander geöffnet werden, so dass zeitlich versetzte Luftströme durch den Filter der Staubsaugvorrichtung fließen, um diesen abzureinigen. Die Erfindung ermöglicht eine besonders energiesparende Abreinigung des Filters einer Staubsaugvorrichtung, wobei die Abreinigung insbesondere während eines laufenden Betriebs der Staubsaugvorrichtung durchgeführt werden kann.

## Beschreibung

Die vorliegende Erfindung betrifft eine Abreinigungseinheit für einen Filter einer Staubsaugvorrichtung, wobei die Abreinigungseinheit mindestens einen Elektromagneten umfasst, der dazu eingerichtet ist, ein Ventil der Abreinigungseinheit zu öffnen oder zu schließen, wobei in einer Offen-Stellung des Ventils ein Luftstrom zum Abreinigen des Filters durch das geöffnete Ventil fließen kann. Das Ventil der Abreinigungseinheit umfasst eine erste Ventilkomponente und eine zweite Ventilkomponente, die vorzugsweise zeitversetzt zueinander geöffnet werden können. In einem zweiten Aspekt betrifft die Erfindung eine Staubsaugvorrichtung mit einer vorgeschlagenen Abreinigungseinheit, sowie ein Verfahren zur Abreinigung eines Filters einer Staubsaugvorrichtung, bei dem die Komponenten des vorzugsweise zweigeteilten Ventils nacheinander geöffnet werden, so dass zeitlich versetzte Luftströme durch den Filter der Staubsaugvorrichtung fließen, um den Filter abzureinigen. Die Erfindung ermöglicht eine besonders energiesparende Abreinigung des Filters einer Staubsaugvorrichtung, wobei die Abreinigung insbesondere während eines laufenden Betriebs der Staubsaugvorrichtung durchgeführt werden kann.

### Hintergrund der Erfindung:

In der Industrie oder im Baugewerbe ist es bekannt, Staubsaugvorrichtungen zur Beseitigung von Stäuben oder Verunreinigungen zu verwenden. Eine Untergruppe dieser Staubsaugvorrichtungen wird bevorzugt auch als Entstauber bezeichnet. Bei industriell verwendeten Staubsaugvorrichtungen oder Entstaubern ist es vor allem im Zusammenhang mit Beton-Staub vorteilhaft, den eingesetzten Filter in regelmäßigen Abständen automatisch oder halb-automatisch abzureinigen, um ein effizientes Einsaugen von Staub und Verunreinigungen gewährleisten zu können. Im Stand der Technik sind insbesondere zwei unterschiedliche Ansätze bekannt, um eine Abreinigung eines Filters einer Staubsaugvorrichtungen zu erreichen. Zum einen sind im Stand der Technik solche Systeme bekannt, die auf Vibration basieren, bei denen am Filter anhaftender Staub oder Filterkuchen durch Vibrationen vom Filter gelöst werden sollen. Zum anderen gibt es Staubsaugvorrichtungen, die auf einer Umkehrung des Saugluftroms durch den Filter basieren.

Vibrationsbasierte Systeme haben den wesentlichen Nachteil, dass während der Abreinigungszeit der Filter nicht mehr im Luftstrom steht, da in diesem Fall der abzureinigende Feinstaub in den Filter hinein gezogen würde, anstatt vom Filter losgeschüttelt zu werden. Dies führt dazu, dass die Filter in vibrationsbasierten Systemen entweder nur in Arbeitspausen abgereinigt werden können oder dass ein zweiter Filter oder eine zweite Filterkammer vorgesehen sein müssen, um eine Filterabreinigung im laufenden Betrieb der Staubsaugvorrichtung zu ermöglichen. Die Vorsehung eines zweiten Filters oder einer zweiten Filterkammer führt aber regelmäßig zu einem erheblich erhöhten Bauraum, sowie hohen Herstellungs-, Produktions- und Transportkosten in Zusammenhang mit solchen Staubsaugern. Wenn der Staubsauger nur in den Arbeitspausen abgereinigt werden kann, kann sich dies nachteilig auf die Saugleistung der Staubsaugvorrichtung auswirken. Dies ist vor allem bei sicherheitsrelevanten Bohrungen unerwünscht, wenn beispielsweise eine bestimmte Mindest-Saugleistung erforderlich oder vorgeschrieben ist, um ein Bohrloch zu reinigen. Darüber hinaus kann es bei langen Intervallen zwischen zwei Abreinigungsvorgängen dazu kommen, dass der Filter verstopft. Dies kann eine sehr zeitaufwändige, manuelle Filterreinigung oder den Austausch bzw. die Ersetzung des verstopften Filters erforderlich machen.

Systeme, die auf einer Luftstromumkehrung basieren, weisen in der Regel eine größtmögliche Öffnung des Staubsaugers auf, durch die Umgebungsluft in das Innere des Staubsaugers gelangen kann. Darüber hinaus haben solche luftstromumkehrbasierten Systeme üblicherweise ein Schließventil, dass die Öffnung gegenüber einer Umgebung des Staubsaugers bzw. gegenüber einer Umgebungsluft mit Atmosphärendruck verschließt. Durch die Umgebungsöffnung des Staubsaugers kann bei Öffnung des Ventils Umgebungsluft in das Innere des Staubsaugers gelangen, dabei den abzureinigenden Filter durchströmen und anhaftenden Staub und Filterkuchen lösen. Das Eindringen der Umgebungsluft wird dabei von dem Unterdruck unterstützt, der im Inneren des Staubsaugers vorliegt, um den Saugbetrieb der Staubsaugvorrichtung zu gewährleisten. Der Abreinigungsluftstrom ist dabei dem Luftstrom im Saugbetrieb des Staubsaugers entgegengerichtet; er fließt insbesondere von der staubabgewandten Seite durch den Filter und reinigt den anhaftenden Staub auf der dem Staubsammelbehälter zugewandten Seite vom Filter ab.

Um den Saugstrom möglichst nur sehr kurz zu unterbrechen, öffnet und schließt dieses Ventil vorzugsweise sehr schnell. Vorzugsweise umfasst die Aktorik, die das Ventil zum Öffnen oder Schließen bewegt, durch einen Elektromagneten. Bei netzbetriebenen Staubsaugern, d.h. bei solchen Saugern, die beispielsweise über ein Netzkabel mit einem bevorzugt öffentlichen Energie- oder Stromnetz verbunden werden können, ist dieser Elektromagnet häufig dauerhaft bestromt und wird zum Abreinigen ausgeschaltet. Das Ventil öffnet dann durch den im Inneren des Staubsaugers herrschenden Unterdruck und schließt wieder beim erneuten Einschalten des Elektromagneten. Bei Staubsaugern, die mit einer Batterie oder einem Akkumulator ("Akku") betrieben werden, ist diese dauerhafte Bestromung des Elektromagneten nachteilhaft, da große Mengen Energie durch das Einschalten des Elektromagneten aufgewendet werden müssen.

Die Aufgabe, die der vorliegenden Erfindung zugrunde liegt, besteht darin, die vorstehend beschriebenen Mängel und Nachteile des Standes der Technik zu überwinden und eine Möglichkeit zur Abreinigung eines Filters einer Staubsaugvorrichtung anzugeben, mit dem eine wirksame Abreinigung des Filters, insbesondere während eines laufenden Betriebs des Staubsaugers ermöglicht werden soll. Die bereitzustellende Filterabreinigung soll insbesondere energie- und ressourcenschonend durchgeführt werden können. Darüber hinaus soll ein Verstopfen des Filters wirksam verhindert werden. Ein weiteres Anliegen, das der Erfindung zugrunde liegt, besteht darin, eine Staubsaugvorrichtung, sowie ein Verfahren zur Abreinigung eines Filters einer Staubsaugvorrichtung bereitzustellen, wobei die Staubsaugvorrichtung kompakt und platzsparend ausgebildet sein soll.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Abreinigungseinheit für einen Filter einer Staubsaugvorrichtung vorgesehen. Die Abreinigungseinheit umfasst mindestens einen Elektromagneten, der dazu eingerichtet ist, ein Ventil der Abreinigungseinheit zu öffnen oder zu schließen, wobei in einer Offen-Stellung des Ventils ein Luftstrom zum Abreinigen des Filters durch das geöffnete Ventil fließen kann. Das Ventil umfasst mindestens eine erste Ventilkomponente und eine zweite Ventilkomponente. Es ist im Sinne der Erfindung ganz besonders bevorzugt, dass die erste Ventilkomponente und die zweite Ventilkomponente von zueinander konzentrisch ausgebildeten Ventilkomponenten gebildet werden. Beispielsweise kann die erste Ventilkomponente einen inneren Ventilbestandteil bilden, der beispielsweise mechanisch mit dem Elektromagneten verbunden vorliegen kann. Dadurch kann bei Bestromung des Elektromagneten vorzugsweise zunächst die erste Ventilkomponente angehoben werden, so dass die darunterliegende Umgebungsluftöffnung freigegeben wird und Umgebungsluft durch diese Öffnungen eindringen kann.

Es kann im Sinne der Erfindung auch bevorzugt sein, dass der Elektromagnet und die erste Ventilkomponente übereinander angeordnet vorliegen und keinen oder nur einen kleinen Kontakt zueinander haben. Das kann beispielsweise der Fall sein, wenn der Elektromagnet oberhalb der ersten Ventilkomponente angeordnet vorliegt und das Ventil vertikal geführt wird. Es ist im Sinne der Erfindung bevorzugt, dass das Ventil ein metallisches Element aufweist, das von dem Elektromagneten, wenn er bestromt wird, angezogen werden kann. Das metallische Element kann beispielsweise als kleine metallische Platte oder kleines Metall-Plättchen ausgebildet sein. Vorzugsweise liegt der Elektromagnet ortsfest mit der Staubsaugvorrichtung verbunden vor.

Es kann im Sinne der Erfindung auch bevorzugt sein, dass mehr als zwei Ventilkomponenten vorgesehen sind, um das Ventil zu bilden. Neben der bevorzugt konzentrischen Anordnung von Ventilringen sind im Sinne der Erfindung auch andere Ausgestaltungen und Anordnungen der Ventilkomponenten denkbar.

Vorteilhafterweise kann mit der Erfindung die Kraft reduziert werden, die erforderlich ist, um das Ventil zu öffnen. Dies führt insbesondere dazu, dass Stromflüsse innerhalb der Staubsaugvorrichtung erheblich reduziert werden können, so dass der Staubsauger einfacher ausgelegt und günstiger hergestellt werden kann.

Die zweite Ventilkomponente kann vorzugsweise als konzentrisch um die erste Ventilkomponente herum ausgebildeter Ventilring ausgebildet sein. Es im Sinne der Erfindung bevorzugt, dass die beiden Ventilkomponenten so miteinander verbunden vorliegen, dass eine Hubbewegung der einen Ventilkomponente eine Hubbewegung der zweiten Ventilkomponente bewirkt. Wenn beispielsweise die erste Ventilkomponente durch eine Bestromung des Elektromagneten angehoben wird, kann dadurch vorteilhafterweise die zweite Ventilkomponente des Ventils ebenfalls angehoben werden. Mit anderen Worten ist es im Sinne der Erfindung bevorzugt, dass ein Öffnen der zweiten Ventilkomponente durch eine Hubbewegung der ersten Ventilkomponente erfolgt. Selbstverständlich kann es im Sinne der Erfindung auch so sein, dass ein Öffnen der ersten Ventilkomponente durch eine Hubbewegung der zweiten Ventilkomponente erfolgt. Es ist im Sinne der Erfindung bevorzugt, dass ein Öffnen des Ventils oder der mindestens einen Ventilkomponente durch eine Hubbewegung des Ventils oder der mindestens einen Ventilkomponente erfolgt. Es ist im Sinne der Erfindung darüber hinaus bevorzugt, dass die Hubbewegung des Ventils oder der mindestens einen Ventilkomponente durch den Elektromagneten bewirkt wird. Es ist im Sinne der Erfindung besonders bevorzugt, dass ein Öffnen der ersten Ventilkomponente durch eine Hubbewegung erfolgt, die vom Elektromagneten bewirkt wird.

Es ist im Sinne der Erfindung bevorzugt, dass der Elektromagnet oberhalb der ersten Ventilkomponente angeordnet vorliegt. Er kann insbesondere fest mit einem Gehäuse oder einer Mittelplatte des Staubsaugers verbunden vorliegen. Wenn der Elektromagnet bestromt wird, kann das metallische Element der ersten Ventilkomponente von dem Elektromagneten angezogen werden, so dass die erste Ventilkomponente angehoben und das Ventil dadurch in die Offen-stellung gebracht wird. Es ist im Sinne der Erfindung insbesondere bevorzugt, dass sich die erste Ventilkomponente durch die Anziehung des Elektromagneten in Richtung des Elektromagneten, d.h. in eine Raumrichtung nach oben, bewegt. Es ist im Sinne der Erfindung bevorzugt, dass das Ventil vertikal geführt wird, um ein Verkippen oder Abgleiten zu verhindern.

Es stellt einen Vorteil der vorliegenden Erfindung dar, dass trotz der zweiteiligen Ausführung des Ventils weiter nur ein Elektromagnet erforderlich ist, um das Ventil bzw. seine Komponenten zu öffnen bzw. zu schließen. Selbstverständlich ist es aber auch möglich, mehr als einen Elektromagneten zu verwenden. Beispielsweise kann pro Ventilkomponente ein Elektromagnet verwendet werden, um die jeweilige Ventilkomponente zu öffnen oder zu schließen. Wenn genau ein Elektromagnet verwendet wird, um das Ventil bzw. seine Komponenten zu öffnen, kann mit der Erfindung vorteilhafterweise ein platzsparender und besonders kompakter Staubsauger bereitgestellt werden, der insbesondere vergleichsweise kostengünstig hergestellt werden kann.

Insbesondere ist der eine Elektromagnet dazu eingerichtet, die Ventilkomponenten bevorzugt nacheinander anzuheben und so das Ventil zu öffnen bzw. in eine Offen-Stellung zu bringen. Der Begriff «Offen-Stellung» stellt für den Fachmann keinen unklaren Begriff dar, denn der Fachmann weiß, dass mit dem Begriff «Offen-Stellung» gemeint ist, dass mindestens eine der beiden Ventilkomponenten geöffnet ist. Der Begriff «geöffnet» ist im Sinne der Erfindung vorzugsweise so zu verstehen, dass durch ein geöffnetes Ventil ein so großer Luftstrom fließen kann, dass basierend auf diesem Luftstrom eine wirksame Abreinigung des Filters der Staubsaugvorrichtung erfolgen kann. Der Begriff «Geschlossen-Stellung» stellt im Wesentlichen das Gegenteil zu dem Begriff «Offen-Stellung» dar. Der Begriff «Geschlossen-Stellung» ist im Sinne der Erfindung so zu verstehen, dass diese vorliegt, wenn das Ventil und die Ventilkomponenten im Wesentlichen vollständig geschlossen vorliegen. In der Geschlossen-Stellung des Ventils ist es bevorzugt, dass im Wesentlichen kein Luftstrom durch das Ventil fließen kann oder dass ein kleiner, etwaiger Luftstrom, der beispielsweise aufgrund von Undichtigkeiten auftreten kann, nicht ausreicht, um eine wirksame Abreinigung des Filters der Staubsaugvorrichtung zu bewirken. Funktionell betrachtet, ist es im Sinne der Erfindung bevorzugt, dass eine Abreinigung des Filters in einer Offen-Stellung des Ventils stattfindet, während in der Geschlossen-Stellung des Ventils keine wirksame Abreinigung des Filters stattfindet.

Es ist im Sinne der Erfindung bevorzugt, dass der Luftstrom zum Abreinigen des Filters durch und/oder um das geöffnete Ventil fließen kann, wenn das Ventil in einer Offen-Stellung vorliegt.

Mit der Erfindung kann es vorteilhafterweise ein Staubsauger mit einer vergleichsweise großen Umgebungsluft-Öffnung bereitgestellt werden, bei dem die Kraft zum Öffnen des Ventils trotzdem durch einen Elektromagneten aufgebracht werden kann. Dieser erfindungsgemäße Vorteil wird insbesondere durch die Vorsehung des Ventils erreicht, welches aus mindestens einer ersten und einer zweiten Ventilkomponente zusammengesetzt ist. Die Kraft, die vom Elektromagneten zum Öffnen des Ventils aufgebracht werden muss, hängt vorzugsweise mit der Fläche der Umgebungsluft-Öffnung zusammen, die Kraft und die Fläche der Umgebungsluft-Öffnung verhalten sich vorzugsweise im Wesentlichen proportional zueinander. Insbesondere kann die Kraft auch von der Fläche des Ventils abhängen, die mit einem Unter- oder Differenzdruck beaufschlagt ist. Die Umgebungsluft-Öffnung kann aus einer einzelnen Öffnung bestehen, sie kann jedoch auch aus mehreren Öffnungen gebildet sein. Zur Vereinfachung der Darstellung wird im Folgenden bevorzugt von einer Öffnung gesprochen. Indem das Ventil nun zweiteilig ausgebildet ist, muss während eines Hub- bzw. Öffnungsvorgangs jeweils nur eine solche Kraft aufgebracht werden, die der Fläche des Ventils entspricht, die mit Unterdruck beaufschlagt ist. Diese Kraft ist vorzugsweise für die einzelnen Komponenten kleiner als für die Gesamtfläche des Ventils, so dass sie vom Elektromagneten ohne Weiteres aufgebracht werden kann. Insofern trägt die zweiteilige Ausgestaltung des Ventils dazu bei, dass ein Staubsauger mit einer vergleichsweise großen Umgebungsluft-Öffnung bereitgestellt werden kann, bei dem ein starker Abreinigungsluftstrom durch den Filter fließen kann. Auf der anderen Seite ist aber auch sichergestellt, dass der eingesetzt Elektromagnet stark genug ist, das Öffnen des Ventils zu bewirken, in dem die Ventilkomponenten vorzugsweise nacheinander angehoben werden. Dabei kann die Hubbewegung der ersten Ventilkomponente vorzugsweise das Anheben der zweiten Ventilkomponente bewirken. Tests haben gezeigt, dass das nicht gleichzeitige Öffnen der einzelnen Ventilkomponenten zu besonders guten Abreinigungsergebnissen führt, obwohl die Fachwelt bisher davon ausgegangen war, dass ein einziger, gleichzeitiger Öffnungsvorgang zu einer wirkungsvollen Filterabreinigung führt.

Es ist im Sinne der Erfindung bevorzugt, dass die einzelnen Komponenten des Ventils werde in sehr kurzem Abstand zueinander geöffnet werden. Dadurch kann die aufzubringende Magnetkraft vorteilhafterweise deutlich reduziert werden im Vergleich zu der Kraft, für die die Öffnung des gesamten Ventils aufzubringen wäre. Die bevorzugt sukzessive Öffnung der Ventilkomponenten erlaubt es, einen wesentlich schwächeren Elektromagneten zu verwenden, was zu erheblichen Kostenersparnissen im Bereich der Produktion und Beschaffung führen kann. Alternativ kann durch die Erfindung im Inneren des vorgeschlagenen Staubsaugers ein wesentlich höherer Unterdruck aufgebaut und für den Saugbetrieb verwendet werden, so dass vorteilhafterweise ein Staubsauger bereitgestellt werden kann, der eine erhöhte Saugkraft im Vergleich zu konventionellen Staubsaugern aufweist. Dadurch kann insbesondere die Abreinigungseffektivität erhöht werden.

Es ist im Sinne der Erfindung bevorzugt, dass die erste und die zweite Ventilkomponente jeweils einen Teil der Umgebungsluftöffnung verschließen. Die Ventilkomponenten sind an den entsprechenden Kontaktflächen vorzugsweise mit dem Unterdruck beaufschlagt, der im Inneren des Staubsaugers herrscht. Beim Bestromen des Elektromagneten wird in einer bevorzugten Ausführungsform der Erfindung zuerst die erste Ventilkomponente angehoben, wobei die vom Elektromagneten zu überwindende Kraft vorzugsweise dem Produkt aus der mit dem Unterdruck beaufschlagten Fläche und dem entsprechenden Unterdruck entspricht. Sobald die erste Ventilkomponente einen minimalen Weg bzw. eine kleine Strecke in die Raumrichtung nach oben (positive Z-Richtung) zurückgelegt hat ("Hubbewegung"), kollidiert die erste Ventilkomponente mit der zweiten Ventilkomponente, so dass die zweite Ventilkomponente ebenfalls dazu gebracht wird, eine Bewegung in die Raumrichtung nach oben auszuführen. Dieses Mitreißen der zweiten Ventilkomponente durch die erste Ventilkomponente wird vorzugsweise durch die mechanische Verbindung zwischen den Ventilkomponenten erreicht.

Beispielsweise kann die zweite Ventilkomponente eine oder mehrere vorstehende Nasen aufweisen, die oberhalb der ersten Ventilkomponente angeordnet sein können. In der Geschlossen-Stellung liegt vorzugsweise ein Spalt bzw. ein Luftspalt zwischen einer Oberfläche der ersten Ventilkomponente und der Nase oder den Nasen der zweiten Ventilkomponenten vor, wobei dieser Spalt für die zeitversetzte Öffnung der Ventilkomponenten verantwortlich ist. Es ist im Sinne der Erfindung bevorzugt, dass die erste Ventilkomponente durch ihre Hubbewegung den Spalt überwindet. Eine Oberfläche der ersten Ventilkomponente kann dann von unten an die Nase(n) der zweiten Ventilkomponente anstoßen und die zweite Ventilkomponente dadurch anheben. Die bei der Hubbewegung in positive Z-Richtung zurückgelegte Strecke der ersten Ventilkomponente ist über die Bewegungsgeschwindigkeit mit einer Zeitspanne verknüpft, die vorzugsweise der Zeitdifferenz DELTA_t entspricht, um die versetzt sich die beiden Ventilkomponenten öffnen.

Durch die bevorzugt zeitversetzte Öffnungszeit der Ventilkomponenten kann eine Fläche der Umgebungsluftöffnung maximiert werden, so dass ein überraschend starker Luftstrom zur Abreinigung des Filters erzeugt werden kann. Es ist im Sinne der Erfindung bevorzugt, dass der Unterdruck im Inneren des Staubsaugers nach Öffnen der ersten Ventilkomponente ein wenig abfällt, so dass das Öffnen der zweiten Ventilkomponente dadurch weiter vereinfacht werden kann. Insbesondere kann durch diesen Effekt die Kraft, die der Elektromagnet zum Öffnen der zweiten Ventilkomponente aufbringen muss, weiter reduziert werden, so dass entweder Energie gespart, ein schwächerer - und oft günstigerer - Elektromagnet verwendet oder ein höherer Unterdruck im Staubsauger für den Saugbetrieb verwendet werden kann.

Es ist im Sinne der Erfindung bevorzugt, dass das Öffnen der Ventilkomponenten zeitversetzt zueinander erfolgt. Vorzugsweise sind die Hubbewegungen der ersten und der zweiten Ventilkomponenten so miteinander verschränkt, dass die erste Ventilkomponente und die zweite Ventilkomponente um eine Zeitdifferenz DELTA_t versetzt zueinander geöffnet werden, wobei die Zeitdifferenz DELTA_t in einem Bereich von 1 bis 100 ms liegt, bevorzugt in einem Bereich von 1 bis 50 ms und am meisten bevorzugt in einem Bereich von 1 bis 20 ms. Ganz besonders bevorzugt können beispielsweise Zeitdifferenzen von ca. 5 ms sein. Trotz des geringen zeitlichen Versatzes zwischen den Hubbewegungen der Ventilkomponenten des Ventils der vorgeschlagenen Abreinigungseinheit sind die Ventilkomponenten über einen großen Teil der Öffnungszeit des Ventils gemeinsam geöffnet. Tests haben gezeigt, dass trotz des nicht gleichzeitigen Öffnens des Ventils überraschend gute Filterabreinigungsergebnisse erzielt werden, obwohl die Fachwelt bisher davon ausgegangen war, dass dafür ein schlagartiges, gleichzeitiges Öffnen aller Ventile bzw. Ventilkomponenten erforderlich ist. Es ist im Sinne der Erfindung insbesondere bevorzugt, dass der Anfang der Hubbewegungen zeitversetzt zueinander erfolgt, während einer Rückkehr der Komponenten des Ventils in ihre Ausgangs- oder Geschlossen-Stellung im Wesentlichen zeitgleich erfolgt. Es ist im Sinne der Erfindung bevorzugt, dass die Zeitspanne zwischen dem Öffnen der ersten Ventilkomponente und der zweiten Ventilkomponenten von der Höhe bzw. von der Größe des Spalts abhängig ist. Mit anderen Worten kann die Zeitdifferenz DELTA_t zwischen dem Öffnen der beiden Ventilkomponenten von der Höhe bzw. von der Größe des Spalts zwischen der Oberfläche der ersten Ventilkomponente und den vorstehenden Elementen der zweiten Ventilkomponenten abhängen.

Bei der Hubbewegung handelt es sich im Sinne der Erfindung bevorzugt um eine Bewegung der Ventilkomponenten in eine Raumrichtung "nach oben". Dabei handelt es sich bei einem Staubsauger, bei dem ein unterer Bereich den Staubsammelbehälter und ein oberer Bereich einen Saugerkopf mit Turbine und Motor umfasst, vorzugsweise um eine Bewegung in Richtung des Saugerkopfes. Der Filter und die Abreinigungseinheit sind im Sinne der Erfindung horizontal in dem Staubsauger angeordnet, so dass die Hubbewegung der Ventilkomponenten vorzugsweise im Wesentlichen senkrecht zu einer Anordnungsebene des Filters und/oder der vorgeschlagenen Abreinigungseinheit erfolgt. Die Lage der Raumrichtungen ist auch in den Figuren dargestellt. Es ist im Sinne der Erfindung bevorzugt, dass die Hubbewegung der Ventilkomponenten in eine Raumrichtung "nach oben" bevorzugt auch als positive Z-Richtung bezeichnet wird, während eine Bewegung in Raumrichtung "nach unten", d.h. vorzugsweise in Richtung des Staubsammelbehälters oder in Richtung des Untergrunds, auf dem der Staubsauger steht, als negative Z-Richtung bezeichnet wird. In diese negative Z-Richtung fallen die Ventilkomponenten nach beendeter Filterabreinigung bevorzugt zurück, wenn die Bestromung des Elektromagneten beendet wird.

Es ist im Sinne der Erfindung bevorzugt, dass das Ventil auf der vom Staubsammelbehälter abgewandten Seite des Filters des Staubsaugers angeordnet ist. Das Ventil ist vorzugsweise dazu eingerichtet, so geöffnet zu werden, dass Umgebungsluft in das Innere der Staubsaugvorrichtung gelangen kann. Dieses Eindringen der Umgebungsluft erfolgt im Kontext der vorgeschlagenen Filterabreinigung vorzugsweise schlagartig, damit eine besonders wirksame Luftstromumkehrung und Abreinigungswirkung erreicht werden kann. Das Eindringen der Umgebungsluft stellt im Sinne der Erfindung ein Einsaugen dar, da im Inneren des Staubsaugers, insbesondere im Staubsammelraum, ein Unterdruck herrscht, der vorzugsweise von der Saugturbine und dem Saugmotor erzeugt wird. Durch den Druckunterschied zum atmosphärischen Druck in der Umgebung des Staubsaugers wird Umgebungsluft bei Öffnen des Ventils vorteilhafterweise schlagartig in das Innere der vorgeschlagenen Staubsaugvorrichtung eingesogen, so dass ein Abreinigungsluftstrom erzeugt wird, der durch das geöffnete Ventil des Staubsaugers und durch den abzureinigenden Filter in Richtung des Staubsammelbehälters fließt. Durch das große Volumen und die hohe Flussgeschwindigkeit des Luftstroms, der dem Saugluftstrom vorzugsweise entgegengerichtet ist, kann anhaftender Staub und Filterkuchen vom Filter gelöst und der Filter so gereinigt werden. Es ist im Sinne der Erfindung bevorzugt, dass der gelöste Staub und der gelöste Filterkuchen in den Staubsammelbehälter fallen können, wo sie bis zur nächsten Leerung desselben aufbewahrt werden.

Es ist im Sinne der Erfindung bevorzugt, dass der Elektromagnet dazu eingerichtet ist, das Ventil oder mindestens eine der Ventilkomponenten zu öffnen, wenn der Elektromagnet bestrom wird. Die Bestromung des Elektromagneten, um das damit verbundene Ventil zu öffnen, stellt eine Abkehr vom Stand der Technik dar, insbesondere dann, wenn es sich um ein zumindest zweiteilig ausgebildetes Ventil handelt. Mithin wird das aus dem Stand der Technik bekannte Prinzip der dauerhaften Bestromung des Elektromagneten mit Unterbrechung der Bestromung im Abreinigungsfall mit der Erfindung gerade umgekehrt. Dadurch wird das Ventil vorteilhafterweise durch den im Inneren des Staubsaugers befindlichen Unterdruck geschlossen gehalten.

Mit anderen Worten wird mit der Erfindung der im Saugbetrieb der Staubsaugvorrichtung vorhandene Unterdruck ausgenutzt, um das Ventil bzw. seine Komponenten während des Saugbetriebs geschlossen zu halten. Soll das Ventil zur Durchführung einer Filterabreinigung geöffnet werden, ist es im Sinne der Erfindung bevorzugt, dass der Elektromagnet bestromt wird, so dass das Ventil bevorzugt schlagartig aufgerissen wird. Die Öffnung des Ventils bzw. seiner Komponenten bei Bestromung des Elektromagneten ist insbesondere für akku- oder batteriebetriebene Staubsauger von Vorteil, weil ein auf diesem Prinzip arbeitender Staubsauger deutlich weniger Energie verbraucht als ein Staubsauger mit dauerbestromten Elektromagneten.

Es ist im Sinne der Erfindung bevorzugt, den Elektromagneten für eine Zeitspanne t_Abreinigung zu bestromen, wobei diese Zeitspanne t_Abreinigung in einem Bereich von 1 bis 1.000 ms, bevorzugt in einem Bereich von 1 bis 500 ms, mehr bevorzugt in einem Bereich von 1 bis 100 ms und am meisten bevorzugt in einem Bereich von 1 bis 50 ms liegt. Ganz besonders bevorzugt können beispielsweise Zeitspannen von ca. 20 ms sein. Dadurch kann die Energie, die für das Öffnen des Ventils und für die Durchführung der Filterabreinigung auf ein Minimum reduziert werden. Dies ist vor allem für akku- oder batteriebetriebene Geräte von Vorteil, weil dadurch die Batterie- oder Akkulaufzeit verlängert werden kann bzw. die Saugintervalle zwischen zwei Batterie- oder Akkuwechseln verlängert werden können.

Ein weiterer wichtiger Vorteil der kurzen Bestromungszeiten des Elektromagneten besteht darin, dass dadurch der Saugbetrieb nur kurz unterbrochen werden muss. Es ist im Sinne der Erfindung bevorzugt, dass die Unterbrechung des Saugbetriebs so kurz ist, dass sie von einem informierten Nutzer der vorgeschlagenen Staubsaugvorrichtung im Wesentlichen nicht wahrgenommen oder bemerkt wird.

Insofern werden die kurzen Elektromagnet-Bestromungszeiten, die im Kontext der vorliegenden Erfindung bevorzugt sind, als so kurz angesehen, dass die Durchführung einer Filterabreinigung im Wesentlichen während eines laufenden Betriebs des Staubsaugers erfolgen kann. Dadurch kann vorteilhafterweise die Saugeffizienz des vorgeschlagenen Staubsaugers erheblich verbessert werden. Außerdem kann durch die bevorzugt kurzen Bestromungszeiten des Elektromagneten ein zu seltenes Abreinigen des Filters, das nachteiligerweise zu seiner Verstopfung führen kann, wirksam vermieden werden.

Es ist im Sinne der Erfindung bevorzugt, dass das Ventil oder die mindestens eine Ventilkomponenten aus der Offen-Stellung in eine Geschlossen-Stellung zurückkehren, wenn eine Bestromung des Elektromagneten beendet wird. Mit anderen Worten kann die Bestromung des Elektromagneten beendet werden, wenn eine ausreichende Filterabreinigung erfolgt ist oder wenn zu erwarten ist, dass das Abreinigungsergebnis ausreichend war, um einen stabilen Saugbetrieb fortzuführen. Wie bereits ausgeführt, können die Elektromagnet-Bestromungszeiten auf diese Weise überraschend kurz gehalten und trotzdem ein gutes Filterabreinigungsergebnis gewährleistet werden.

Es ist im Sinne der Erfindung bevorzugt, dass die Abreinigungseinheit eine Spannelement aufweist, wobei das Spannelement dazu eingerichtet ist, eine Rückkehr des Ventils oder der Ventilkomponenten in eine Geschlossen-Stellung zu unterstützen. Vorzugsweise fallen beim Abschalten des Elektromagneten die Ventilkomponenten zurück in ihre Ausgangslage, die im Sinne der Erfindung vorzugsweise auch als Geschlossen-Stellung bezeichnet wird. Dieses Zurückfallen wird insbesondere durch den Unterdruck befördert, der insbesondere während des Saugbetriebs im Inneren des Staubsaugers herrscht. Dieser Rückkehr-Vorgang kann durch ein Spannelement unterstützt werden, wobei das Spannelement insbesondere als Feder ausgebildet sein kann.

In weiteren Aspekten betrifft die Erfindung eine Staubsaugvorrichtung mit einer vorgeschlagenen Abreinigungseinheit, sowie ein Verfahren zur Abreinigung eines Filters einer solchen Staubsaugvorrichtung. Das Verfahren umfasst folgende Verfahrensschritte:
a) Betrieb der Staubsaugvorrichtung,
b) Bestromen des Elektromagneten, wodurch die erste Ventilkomponente der Abreinigungseinheit geöffnet und ein erster Luftstrom zum Abreinigen des Filters der Staubsaugvorrichtung erzeugt wird,
c) Öffnen der zweiten Ventilkomponente der Abreinigungseinheit, so dass ein zweiter Luftstrom zum Abreinigen des Filters der Staubsaugvorrichtung erzeugt wird, wobei die zweite Ventilkomponente durch das Öffnen der ersten Ventilkomponenten geöffnet wird,
d) Beendung der Bestromung des Elektromagneten der Abreinigungseinheit, so dass die Ventilkomponenten in eine Geschlossen-Stellung zurückkehren und eine Abreinigung des Filters der Staubsaugvorrichtung beendet wird.

Die für die Abreinigungseinheit eingeführten Begriffe, Definitionen und technischen Vorteile gelten vorzugsweise für das Abreinigungsverfahren und für den Staubsauger analog. Es ist im Sinne der Erfindung bevorzugt, dass die Filterabreinigung während des laufenden Betriebs der Staubsaugvorrichtung initiiert und durchgeführt werden kann.

Es ist im Sinne der Erfindung bevorzugt, dass der Betrieb des Staubsaugers zunächst bei geschlossenem Ventil stattfindet. Vorzugsweise sorgt der Betrieb der Staubsaugvorrichtung in einer Geschlossen-Stellung des Ventils zu dem gewünschten Saugbetrieb, indem im Inneren des Staubsaugers ein Unterdruck erzeugt wird, mit dessen Hilfe Staub oder Verunreinigungen in den Staubsammelbehälter eingesaugt werden können. Es ist im Sinne der Erfindung bevorzugt, dass der Elektromagnet während des Saugbetrieb des Staubsaugers nicht bestromt wird, so dass der Saugbetrieb des Staubsaugers besonders energiesparend durchgeführt werden kann. Vorzugsweise wird der Elektromagnet dann bestromt, wenn eine Filterabreinigung stattfinden soll. Mit anderen Worten wird der Elektromagnet bestromt, um eine Filterabreinigung zu initiieren, indem das Bestromen des Elektromagneten zu einem Öffnen des Ventils führt. Es ist im Sinne der Erfindung bevorzugt, dass durch das Bestromen des Elektromagneten das Ventil zumindest teilweise geöffnet wird, so dass es von einer Geschlossen-Stellung zumindest teilweise in einer Offen-Stellung überführt werden kann. Der Begriff "zumindest teilweise öffnen" bedeutet im Sinne der Erfindung bevorzugt, dass entweder das ganze Ventil oder mindestens eine der beiden Ventilkomponenten geöffnet wird. Das ganze Ventil ist vorzugsweise dann geöffnet, wenn beide Ventilkomponenten im Wesentlichen gleichzeitig geöffnet vorliegen. Das Ventil liegt in einer Geschlossen-Stellung vor, wenn das ganze Ventil, d.h. beide Ventilkomponenten, geschlossen sind. Bei der Filterabreinigung kann ein Luftstrom in das Innere des Staubsaugers eindringen und den Filter durch eine Rückspülung reinigen. Es ist im Sinne der Erfindung bevorzugt, dass durch die Vorsehung einer ersten und einer zweiten Ventilkomponente ein erster und ein zweiter Luftstrom zur Filterabreinigung erzeugt werden kann, wobei die Luftströme zusammen bevorzugt den Gesamt-Filterabreinigungs-Luftstrom bilden.

Es ist im Sinne der Erfindung bevorzugt, dass ein Bestromen des Elektromagneten eine Hubbewegung der ersten Ventilkomponente der Abreinigungseinheit bewirkt, so dass ein erster Luftstrom zum Abreinigen des Filters der Staubsaugvorrichtung erzeugt wird. Darüber hinaus ist es bevorzugt, dass durch eine Hubbewegung der zweiten Ventilkomponente der Abreinigungseinheit ein zweiter Luftstrom zum Abreinigen des Filters der Staubsaugvorrichtung erzeugt wird, wobei die Hubbewegung der zweiten Ventilkomponente durch die Hubbewegung der ersten Ventilkomponenten bewirkt wird.

Es ist im Sinne der Erfindung bevorzugt, dass eine Hubbewegung bzw. das Anheben der ersten Ventilkomponente durch den Elektromagnet bewirkt wird, insbesondere durch das Bestromen des Elektromagneten. Dadurch wird die erste Ventilkomponente vom der Umgebungsluft-Öffnung entfernt bzw. abgehoben und der Öffnung freigegeben. Mit anderen Worten kann das Ventil bzw. die erste Ventilkomponente durch das Bestromen des Elektromagneten in eine Offen-Stellung gebracht werden. Dadurch wird der erste Luftstrom zur Abreinigung des Filters der Staubsaugvorrichtung erzeugt, wobei der erste Luftstrom und der zweite Luftstrom, der durch das Anheben der zweiten Ventilkomponente hervorgerufen wird, zusammen den Gesamt-Abreinigungsluftstrom bilden, der zur Abreinigung des Filters des Staubsaugers verwendet wird. Dabei tritt der erste Luftstrom vorzugsweise durch den Teil der Umgebungsluft-Öffnung in das Innere des Staubsaugers ein, der von der ersten Ventilkomponente freigegeben wird, während der zweite Luftstrom vorzugsweise durch den Teil der Umgebungsluft-Öffnung in das Innere des Staubsaugers eintritt, der von der zweiten Ventilkomponente freigegeben wird.

Die zweite Ventilkomponente wird vorzugsweise von der ersten Ventilkomponente angehoben und dadurch geöffnet. Dies kann insbesondere durch eine mechanische Verschränkung zwischen den Ventilkomponenten erreicht werden. Die Filterabreinigung wird vorzugsweise dadurch beendet, dass die Bestromung des Elektromagneten beendet wird. Dadurch kehren bzw. fallen die Ventilkomponenten des Ventils der Abreinigungseinheit in eine Geschlossen-Stellung bzw. in ihre Ausgangsstellung zurück. Während die Hubbewegung der Ventilkomponenten vorzugsweise in eine Raumrichtung nach oben erfolgt (positive Z-Richtung), erfolgt die Rückfall-Bewegung der Ventilkomponenten vorzugsweise in eine Raumrichtung nach unten (negative Z-Richtung).

Es ist im Sinne der Erfindung bevorzugt, dass die erste Ventilkomponente und die zweite Ventilkomponente um eine Zeitdifferenz DELTA_t versetzt zueinander geöffnet werden, wobei die Zeitdifferenz DELTA_t in einem Bereich von 1 bis 100 ms liegt, bevorzugt in einem Bereich von 1 bis 50 ms und am meisten bevorzugt in einem Bereich von 1 bis 20 ms. Durch die zeitversetzte Öffnung der Ventilkomponenten kann vorteilhafterweise Energie gespart, ein schwächerer - und oft günstigerer - Elektromagnet verwendet oder ein höherer Unterdruck im Staubsauger für den Saugbetrieb verwendet werden. Trotz der zeitversetzen Öffnung der Ventilkomponenten besteht im Kontext der vorliegenden Erfindung ein großer Überlapp in Bezug auf die Öffnungszeit der Ventilkomponenten.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert. Es zeigen:
- Fig. 1: Ansicht einer bevorzugten Ausgestaltung der Abreinigungseinheit
- Fig. 2: Detailansicht einer bevorzugten Ausgestaltung der Abreinigungseinheit, insbesondere der Ventilkomponenten

### Ausführungsbeispiele und Figurenbeschreibung:

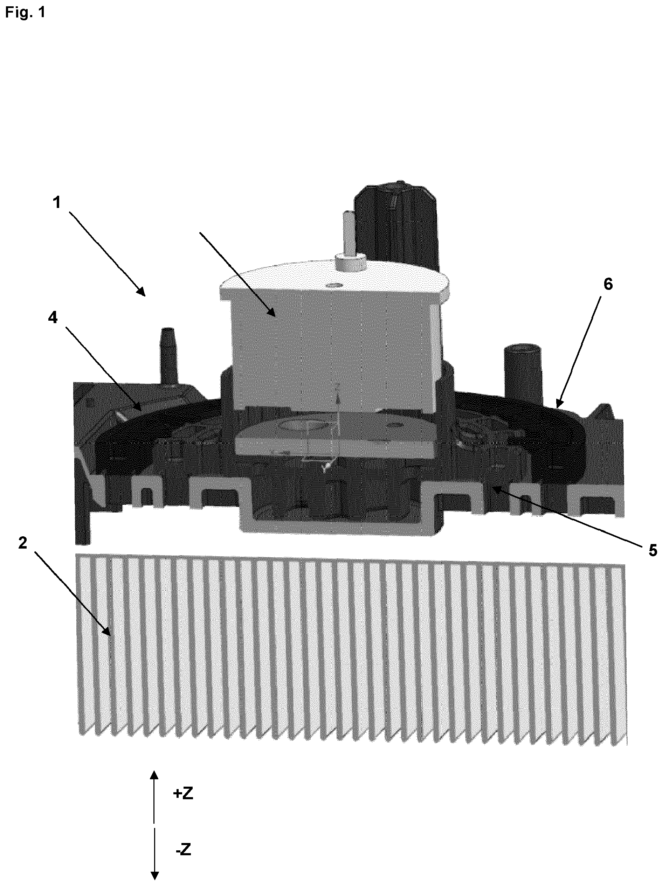

Figur 1 zeigt eine bevorzugte Ausgestaltung der Abreinigungseinheit 1. Die Abreinigungseinheit 1 umfasst einen Elektromagneten 3, der dazu eingerichtet ist, ein Ventil 4 der Abreinigungseinheit 1 zu öffnen und zu schließen. Die Abreinigungseinheit 1 kann in einer Staubsaugvorrichtung (nicht dargestellt) vorliegen, wobei die Abreinigungseinheit 1 vorzugsweise im Wesentlichen horizontal in der Staubsaugvorrichtung angeordnet vorliegt. Die Staubsaugvorrichtung umfasst einen Filter 2, der in dem in Fig. 1 dargestellten Beispiel der Erfindung zwischen der Abreinigungseinheit 1 (oben) und einem Staubsammelbehälter (unten) des Staubsaugers angeordnet ist. Die Unterseite des Filters 2 wird daher vorzugsweise als Tankseite oder als die dem Staubsammelbehälter zugewandte Seite des Filters 2 bezeichnet.

Erfindungsgemäß ist vorgesehen, dass das Ventil 4 der Abreinigungseinheit 1 wenigstens zweiteilig ausgebildet ist. In dem in Fig. 1 dargestellten Beispiel der Erfindung umfasst das Ventil 4 eine erste Ventilkomponente 5 und eine zweite Ventilkomponente 6. Die beiden Ventilkomponenten 5, 6 sind vorzugsweise als Ventilringe ausgebildet, die konzentrisch zueinander angeordnet sind. Mit anderen Worten stellt die zweite Ventilkomponente 6 einen Ventilring dar, der um die ring- oder kreisförmig ausgebildete erste Ventilkomponente 5 herum angeordnet vorliegt. Es ist im Sinne der Erfindung bevorzugt, dass die zweite Ventilkomponente 6 einen äußeren Bereich des Ventils 4 der Abreinigungseinheit 1 darstellt, während die erste Ventilkomponente 5 den inneren Bereich des Ventils 4 darstellt. Es ist im Sinne der Erfindung bevorzugt, dass die Ventilkomponenten 5, 6 so miteinander verbunden vorliegen, dass mit einer Hubbewegung der ersten Ventilkomponente 5 die zweite Ventilkomponente 6 ebenfalls angehoben werden kann, wobei das Anheben der Ventilkomponenten 5, 6 einem Öffnen des Ventils 4 entspricht. Die Hubbewegung der Ventilkomponenten 5, 6 erfolgt in eine Raumrichtung nach oben, die im Sinne der Erfindung auch als positive Z-Richtung bezeichnet wird.

Das Anheben der Ventilkomponenten 5, 6 wird vorzugsweise durch den Elektromagneten 3 bewirkt und erfolgt insbesondere bei seiner Bestromung. In dem in Fig. 1 dargestellten Beispiel der Erfindung ist der Elektromagnet 3 mittig, zentral oberhalb der ersten Ventilkomponente 5 der Abreinigungseinheit 1 angeordnet. Es ist im Sinne der Erfindung bevorzugt, dass die Staubsaugvorrichtung eine oder mehrere Öffnungen aufweist, durch die Umgebungsluft 7 in das Innere des Staubsaugers 1 eingesaugt werden kann. Diese Belüftung erfolgt insbesondere dann, wenn das Ventil 4 oder mindestens eine Ventilkomponente 5, 6 geöffnet werden. Das Einsaugen der Umgebungsluft 7 kann insbesondere schlagartig erfolgen, wenn das Ventil 4 der vorgeschlagenen Abreinigungseinheit 1 geöffnet wird, weil - insbesondere während des Saugbetriebs - im Inneren des Staubsaugers 1 ein Unterdruck herrscht, der deutlich geringer ist als der Atmosphärendruck, der in der Umgebung des Staubsaugers vorliegt. Durch das bevorzugt schlagartige Einsaugen von Umgebungsluft 7 kann ein Abreinigungsluftstrom erzeugt werden, der dem Saugstrom, der im Saugbetrieb des Staubsaugers zum Einsaugen von Staub und Verunreinigungen verwendet wird, im Wesentlichen entgegengerichtet ist. Der Abreinigungsluftstrom kann durch den Filter 2 des Staubsaugers strömen und anhaftenden Staub und Filterkuchen lösen und so eine Abreinigung des Filters 2 bewirken. Der Abreinigungsluftstrom kann aus zwei Teil-Abreinigungsluftströmen zusammengesetzt sein, wobei ein erster Abreinigungsluftstrom im Wesentlichen durch die geöffnete erste Ventilkomponente 5 in das Innere des Staubsaugers einströmt, während der zweite Abreinigungsluftstrom im Wesentlichen durch die geöffnete zweite Ventilkomponente 6 in das Innere des Staubsaugers einströmt. Die Umgebung des Staubsaugers bzw. die Umgebungsluft sind in Fig. 1 mit dem Bezugszeichen 7 (ohne Pfeil) versehen.

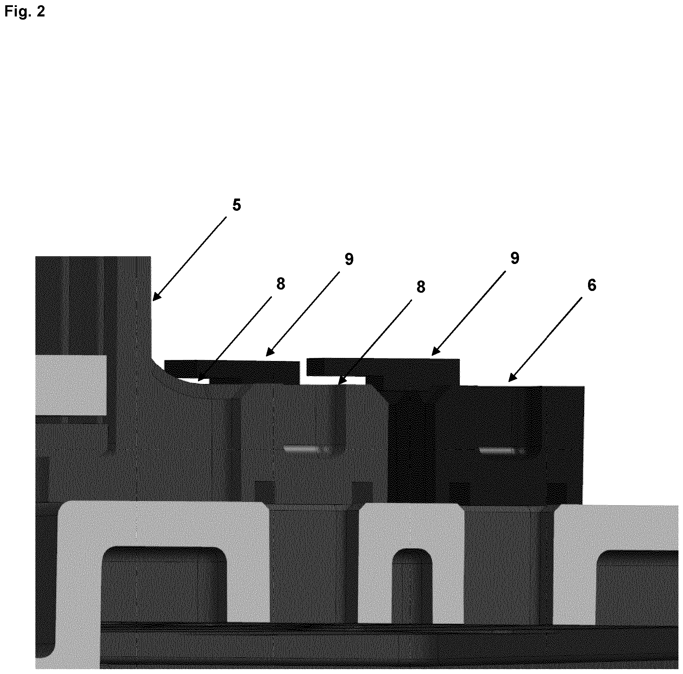

Fig. 2 zeigt eine Detailansicht einer bevorzugten Ausgestaltung der Abreinigungseinheit 1, insbesondere der Ventilkomponenten 5, 6. Die zweite Ventilkomponente 6 kann Nasen 9 als vorstehende Elemente aufweisen, die oberhalb einer Oberfläche der ersten Ventilkomponente 5 angeordnet vorliegen. Zwischen der Oberfläche der ersten Ventilkomponente 5 und der Unterseite der Nasen 9 besteht ein Spalt 8, der vorzugsweise mit Luft gefüllt ist («Luftspalt»). Wenn die erste Ventilkomponente 5 von dem Elektromagneten 3 angehoben wird, vorzugsweise in eine positive Z-Richtung, dann stößt die Oberfläche der ersten Ventilkomponente 5 von unten an die Nasen 9. Dadurch kann vorteilhafterweise erreicht werden, dass auch die zweite Ventilkomponente 6 angehoben wird, wobei bedingt durch den Luftspalt 8 das Anheben der Ventilkomponenten 5, 6 zeitversetzt erfolgt. Es ist im Sinne der Erfindung bevorzugt, dass die zweite Ventilkomponente 6 eine Vielzahl von Nasen 9 aufweist, die vorzugsweise im Wesentlichen regelmäßig auf der Innenseite der zweiten Ventilkomponente 6 angeordnet sind. Dadurch kann erreicht werden, dass die zweite Ventilkomponente 6 besonders gleichmäßig angehoben wird. Es kann im Sinne der Erfindung bevorzugt sein, dass die zweite Ventilkomponente 6 zwei bis zehn, vier bis acht oder sechs Nasen 9 aufweist. Es kann im Sinne der Erfindung auch bevorzugt sein, dass die vorstehenden Elemente 9 der zweiten Ventilkomponente 6 so miteinander verbunden vorliegen, dass sie einen vorzugsweise umlaufenden Kragen bilden, der über die Oberfläche der ersten Ventilkomponente 5 vorsteht bzw. hinausragt. Mit anderen Worten kann die zweite Ventilkomponente 6 einen im Wesentlichen vollständig umlaufenden Kragen 9 aufweisen, der so mit der Oberfläche der ersten Ventilkomponente 5 zusammenwirkt, dass die zweite Ventilkomponente 6 durch eine Hubbewegung der ersten Ventilkomponente 5 in Richtung des Elektromagneten 3 ebenfalls abgehoben wird.

### Bezugszeichenliste

- 1: Abreinigungseinheit
- 2: Filter
- 3: Elektromagnet
- 4: Ventil
- 5: erste Ventilkomponente
- 6: zweite Ventilkomponente
- 7: Umgebungsluft
- 8: Spalt
- 9: vorstehende Elemente, Nasen

## Patentansprüche

1. Abreinigungseinheit (1) für einen Filter (2) einer Staubsaugvorrichtung, wobei die Abreinigungseinheit (1) mindestens einen Elektromagneten (3) umfasst, der dazu eingerichtet ist, ein Ventil (4) der Abreinigungseinheit (1) zu öffnen oder zu schließen, wobei in einer Offen-Stellung des Ventils (4) ein Luftstrom zum Abreinigen des Filters (2) durch das geöffnete Ventil (4) fließen kann,
**dadurch gekennzeichnet, dass**
das Ventil (4) mindestens eine erste Ventilkomponente (5) und eine zweite Ventilkomponente (6) umfasst.

2. Abreinigungseinheit (1) nach Anspruch 1
**dadurch gekennzeichnet, dass**
die erste Ventilkomponente (5) und die zweite Ventilkomponente (6) von zueinander konzentrisch ausgebildeten Ventilringen gebildet werden.

3. Abreinigungseinheit (1) nach Anspruch 1 oder 2
**dadurch gekennzeichnet, dass**
der Elektromagnet (3) dazu eingerichtet ist, das Ventil (4) oder mindestens eine der Ventilkomponenten (5, 6) zu öffnen, wenn der Elektromagnet (3) bestrom wird.

4. Abreinigungseinheit (1) nach einem der vorhergehenden Ansprüche
**dadurch gekennzeichnet, dass**
ein Öffnen des Ventils (4) oder der mindestens einen Ventilkomponente (5, 6) durch eine Hubbewegung des Ventils (4) oder der mindestens einen Ventilkomponente (5, 6) bewirkt wird.

5. Abreinigungseinheit (1) nach einem der vorhergehenden Ansprüche
**dadurch gekennzeichnet, dass**
ein Öffnen der zweiten Ventilkomponente (6) durch eine Hubbewegung der ersten Ventilkomponente (5) bewirkt wird.

6. Abreinigungseinheit (1) nach einem der vorhergehenden Ansprüche
**dadurch gekennzeichnet, dass**
in einer Geschlossen-Stellung des Ventils (4) zwischen der ersten Ventilkomponente (5) und der zweiten Ventilkomponente (6) ein Spalt (8) angeordnet vorliegt.

7. Abreinigungseinheit (1) nach Anspruch 6
**dadurch gekennzeichnet, dass**
die zweite Ventilkomponente (6) vorstehende Elemente (9) aufweist, die mit einer Oberfläche der ersten Ventilkomponente (5) den Spalt (8) einschließen.

8. Abreinigungseinheit (1) nach einem der vorhergehenden Ansprüche
**dadurch gekennzeichnet, dass**
die erste Ventilkomponente (5) und die zweite Ventilkomponente (6) zeitversetzt zueinander geöffnet werden.

9. Abreinigungseinheit (1) nach einem der vorhergehenden Ansprüche
**dadurch gekennzeichnet, dass**
die erste Ventilkomponente (5) und die zweite Ventilkomponente (6) um eine Zeitdifferenz DELTA_t versetzt zueinander geöffnet werden, wobei die Zeitdifferenz DELTA_t in einem Bereich von 1 bis 100 ms liegt, bevorzugt in einem Bereich von 1 bis 50 ms und am meisten bevorzugt in einem Bereich von 1 bis 20 ms.

10. Abreinigungseinheit (1) nach einem der vorhergehenden Ansprüche
**dadurch gekennzeichnet, dass**
das Ventil (4) oder die mindestens eine Ventilkomponente (5, 6) aus der Offen-Stellung in eine Geschlossen-Stellung zurückkehren, wenn eine Bestromung des Elektromagneten (3) beendet wird.

11. Abreinigungseinheit (1) nach einem der vorhergehenden Ansprüche
**dadurch gekennzeichnet, dass**
die Abreinigungseinheit (1) eine Spannelement aufweist, wobei das Spannelement dazu eingerichtet ist, eine Rückkehr des Ventils (4) oder der Ventilkomponenten (5, 6) in eine Geschlossen-Stellung zu unterstützen.

12. Abreinigungseinheit (1) nach einem der vorhergehenden Ansprüche
**dadurch gekennzeichnet, dass**
die erste Ventilkomponente (5) ein metallisches Element aufweist, das von dem Elektromagneten (3) angezogen werden kann.

13. Staubsaugvorrichtung mit einer Abreinigungseinheit (1) nach einem der vorhergehenden Ansprüche

14. Verfahren zur Abreinigung eines Filters (2) einer Staubsaugvorrichtung nach Anspruch 13
**gekennzeichnet durch** die **folgenden Verfahrensschritte:**
a) Betrieb der Staubsaugvorrichtung,
b) Bestromen des Elektromagneten (3), wodurch die erste Ventilkomponente (5) der Abreinigungseinheit (1) geöffnet und ein erster Luftstrom zum Abreinigen des Filters (2) der Staubsaugvorrichtung erzeugt wird,
c) Öffnen der zweiten Ventilkomponente (6) der Abreinigungseinheit (1), so dass ein zweiter Luftstrom zum Abreinigen des Filters (2) der Staubsaugvorrichtung erzeugt wird, wobei die zweite Ventilkomponente (6) durch das Öffnen der ersten Ventilkomponente (5) geöffnet wird,
d) Beendung der Bestromung des Elektromagneten (3) der Abreinigungseinheit (1), so dass die Ventilkomponenten (5, 6) in eine Geschlossen-Stellung zurückkehren und eine Abreinigung des Filters (2) der Staubsaugvorrichtung beendet wird.

15. Verfahren nach Anspruch 14
**dadurch gekennzeichnet, dass**
die erste Ventilkomponente (5) und die zweite Ventilkomponente (6) um eine Zeitdifferenz DELTA_t versetzt zueinander geöffnet werden, wobei die Zeitdifferenz DELTA_t in einem Bereich von 1 bis 100 ms liegt, bevorzugt in einem Bereich von 1 bis 50 ms und am meisten bevorzugt in einem Bereich von 1 bis 20 ms.
